# EUROPEAN PATENT SPECIFICATION

(11) **EP 2 824 365 B1**
(45) Date of publication and mention of the grant of the patent: **22.05.2019**
(21) Application number: 14003261.6
(22) Date of filing: 05.09.2011
(51) Int. Cl.: F16H 1/32

(54) **SPEED REDUCER**
REDUKTIONSGETRIEBE
RÉDUCTEUR DE VITESSE

(30) Priority: 09.09.2010 JP 2010201800; 24.02.2011 JP 2011038449; 25.02.2011 JP 2011039829
(43) Date of publication of application: 14.01.2015
(62) Divisional of application: 11823518.3
(73) Proprietor: NTN Corporation, Osaka-shi, Osaka 550-0003 (JP)
(72) Inventor: Sato, Koji, Iwata-shi Shizuoka, 438-0037 (JP); Akiyoshi, Koji, Iwata-shi Shizuoka, 438-0037 (JP); Nakakoji, Masafumi, Iwata-shi Shizuoka, 438-0037 (JP); Saito, Takahide, Iwata-shi Shizuoka, 438-0037 (JP); Utsunomiya, Satoshi, Iwata-shi Shizuoka, 438-0037 (JP)
(74) Representative: Grünecker Patent- und Rechtsanwälte PartG mbB

(56) References cited:
- WO-A1-2010/004880
- JP-A- S6 293 565
- JP-A- 2010 038 362

## Description

### TECHNICAL FIELD

This invention relates to a roller type speed reducer including an internal gear and rollers adapted to mesh with the internal teeth of the internal gear one after another when the input shaft is rotated, thereby transmitting the rotation of the input shaft to the output shaft after reducing the speed.

### BACKGROUND ART

This type of speed reducer is disclosed in the below-identified Patent document 1. The roller type speed reducer disclosed in Patent document 1 includes input and output shafts arranged coaxially with each other with their ends facing each other, a housing covering the axially facing end portions of the input and output shafts, an internal gear supported by the housing and having a plurality of curved internal teeth formed on the inner periphery thereof. The input shaft carries, at the end portion thereof located inside the housing, two axially spaced apart eccentric disks which are rotatable inside the internal gear. The output shaft has, at its end portion located inside the housing, a cage disposed between the internal gear and rolling bearings mounted on the radially outer surfaces of the respective eccentric disks. The cage has a plurality of circumferentially equidistantly spaced apart pockets in two rows, each row of pockets facing one of the eccentric disks and fewer than the number of the internal teeth. Rollers are received in the respective pockets so as to mesh with the internal teeth of the internal gear one after another while rolling along the radially outer surfaces of the bearings.

In this arrangement, when the input shaft rotates and thus the eccentric disks rotate together with the input shaft, the rollers mesh with the internal teeth of the internal gear one after another such that each roller is circumferentially displaced by the distance equal to the width of one internal tooth every time the input shaft rotates once. The output shaft thus rotates at a reduced speed.

In order to smoothly transmit rotation, in the speed reducer disclosed in Patent document 1, each internal tooth has a curved shape which coincides with the path of the outer portion of one roller which is parallel to the path of the center of this roller when the output shaft is rotated by an angle corresponding to one pitch of the internal teeth of the internal gear by the eccentric disks such that all the rollers contact internal teeth.

Further, in order to smoothly rotate the input and output shafts, the input shaft and the output shaft are rotatably supported by individual rolling bearings. Since thrust loads scarcely act on the input and output shafts, or on the rolling bearings mounted on the eccentric disks, ball bearings are ordinarily used as these rolling bearings.

When the input shaft of the speed reducer is rotated at a high speed, the retainers of the ball bearings may be deformed due to centrifugal force applied to the retainers. In order to prevent deformation of the retainers due to centrifugal force, it is important to reduce the weight of the retainers. Thus, as disclosed e.g. in the below-identified Patent document 2, retainers made of a synthetic resin are used in ball bearings in a speed reducer.

### PRIOR ART DOCUMENTS

### PATENT DOCUMENTS

Patent document 1: JP Patent Publication 62-93565A, showing the features of the preamble of claim 1;
Patent document 2: JP Patent Publication 2009-115128A

### SUMMARY OF THE INVENTION

### OBJECT OF THE INVENTION

In the above-described speed reducer, since the roller guiding ball bearings provided on the radially outer surfaces of the eccentric disks are press-fitted on the eccentric disks, if the input shaft is inclined even slightly, axial loads tend to act on the roller guiding ball bearings, which could cause separation of either or both of the roller guiding ball bearings from the respective eccentric disks. If either of the ball bearings separates from the eccentric disk, the ball bearing will contact e.g. the inner surface of the housing, thus generating rotational resistance due to contact friction. Such rotational resistance impairs smooth rotation of the input shaft, reducing efficiency of the speed reducer. It is desired to avoid this problem.

This type of speed reducers are mainly used in motor vehicles such that the ball bearings mounted on the radially outer surfaces of the eccentric disks, as well as the ball bearings rotatably supporting the input shaft and the output shaft, are dipped in oil bath and lubricated by oil. When the input shaft is rotated at high speed, the balls of these ball bearings shear lubricating oil present between the balls and the inner surfaces of the pockets. Since such shearing force increases rotational resistance, the conventional ball bearings tend to increase torque loss, thus lowering efficiency of the speed reducer. Therefore, there is still room to further improve the efficiency of the speed reducer.

In conventional such speed reducers, the roller receiving pockets have a circumferential width larger than the outer diameter of the rollers. Thus, during assembly of the speed reducer, when the eccentric disks of the input shaft are fitted into the cage or when the cage is fitted into the internal gear supported by the housing, with the rollers received in the respective pockets, rollers could fall out of the pockets. It is therefore necessary to keep the rollers received in the respective pockets while assembling the speed reducer. This makes assembly of the speed reducer troublesome. Thus, it is desired to more easily assemble the speed reducer.

In a conventional speed reducer, the portion of the output shaft to which the flange is connected is rotatably supported by axially spaced apart two bearings mounted in the housing at its open end portion. This is because if the output shaft is supported by a single bearing, the output shaft tends to be inclined by the torque transmitted from the rollers to the cage. The two axially spaced apart bearings increase the axial length of the speed reducer. Thus, there is room to further reduce the axial length of such conventional speed reducers.

Accordingly, it is an objective of the present invention to provide a speed reducer having a reduced axial length. Preferably, high efficiency of the speed reducer by stably and inseparably mounting the roller guiding bearings press-fitted on the eccentric disks of the input shaft, and to maintain low shear resistance of lubricating oil by the balls as well as an easy assembly of the speed reducer should be provided.

### MEANS FOR ACHIEVING THE OBJECT

In order to achieve the above objective, the present invention provides a speed reducer comprising the features of claim 1.

### ADVANTAGES OF THE INVENTION

According to the invention, by the provision of the pair of radial bearing surfaces on the inner side of the housing for supporting the radially outer surface of the flange and the radially outer surface of the cage at its open end portion, respectively, it is possible to reduce the axial length of the speed reducer.

### BRIEF DESCRIPTION OF THE DRAWINGS

Fig. 1 is a vertical sectional front view of a speed reducer.
Fig. 2 is a sectional view taken along line II-II of Fig. 1.
Fig. 3 is an enlarged sectional view of a portion of Fig. 2 where roller guiding bearings are mounted.
Fig. 4 is a sectional view showing a different anti-separation means for preventing separation of the roller guiding bearings.
Fig. 5 is a sectional view showing a still different anti-separation means.
Fig. 6 is a sectional view showing a yet different anti-separation means.
Fig. 7 is a sectional view showing a further different anti-separation means.
Fig. 8 is a sectional view showing a still different anti-separation means.
Fig. 9 is a sectional view of a ball bearing used in the speed reducer.
Fig. 10 is a perspective view of a retainer of the ball bearing of Fig. 9.
Fig. 11 is an exploded perspective view of the retainer of Fig. 10.
Fig. 12 is a plan view of a portion of the retainer of Fig. 9.
Fig. 13 is a sectional view taken along line XIII-XIII of Fig. 12.
Fig. 14 is a sectional view taken along line XIV-XIV of Fig. 12.
Fig. 15 is plan view of a different retainer.
Fig. 16 is a sectional view taken along line XVI-XVI of Fig. 15.
Fig. 17 is a sectional view of a different ball bearing.
Fig. 18 is a sectional view showing means for preventing the roller from radially outwardly coming out of the pocket.
Fig. 19 is a sectional view showing means for preventing the roller from radially inwardly coming out of the pocket.
Fig. 20 is a sectional view showing another means for preventing the roller from radially outwardly coming out of the pocket.
Fig. 21 is an enlarged sectional view of a portion of Fig. 20.
Fig. 22 is a sectional view showing another means for preventing the roller from radially inwardly coming out of the pocket.
Fig. 23 is a vertical sectional front view of a speed reducer embodying the present invention.
Fig. 24 is an enlarged sectional view of a portion of Fig. 23.
Fig. 25 is a sectional view of a still different speed reducer.
Fig. 26 is a sectional view of a further different speed reducer.

### BEST MODE FOR EMBODYING THE INVENTION

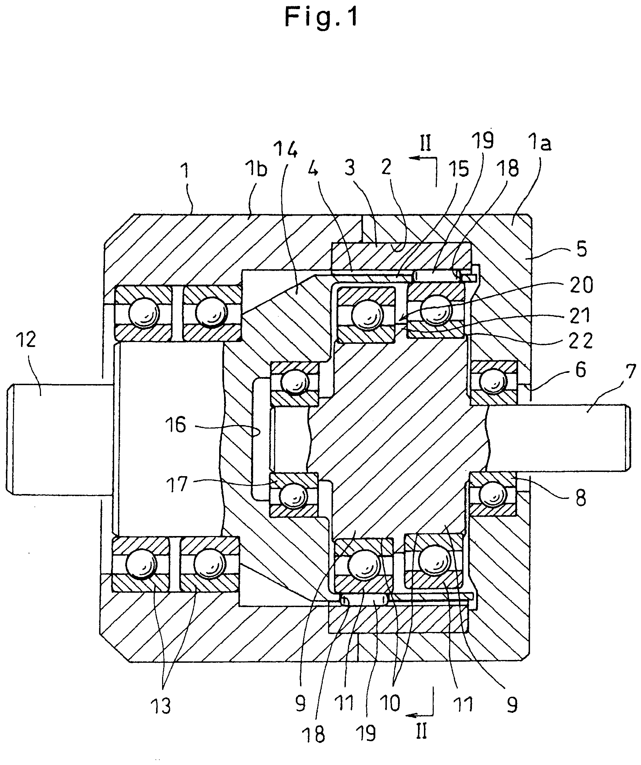

The embodiments and some illustrative examples, not belonging to the invention according to claim 1 are now described with reference to the drawings.
As shown in Fig. 1, the housing 1 is a cylindrical member including first and second separate split housing portions 1a and 1b axially facing each other.

The first and second split housing portions 1a and 1b are joined together by tightening bolts, not shown. A large-diameter recess 2 is formed in the radially inner surface of the housing 1 so as to extend across the abutting ends of the first and second split housing portions 1a and 1b.

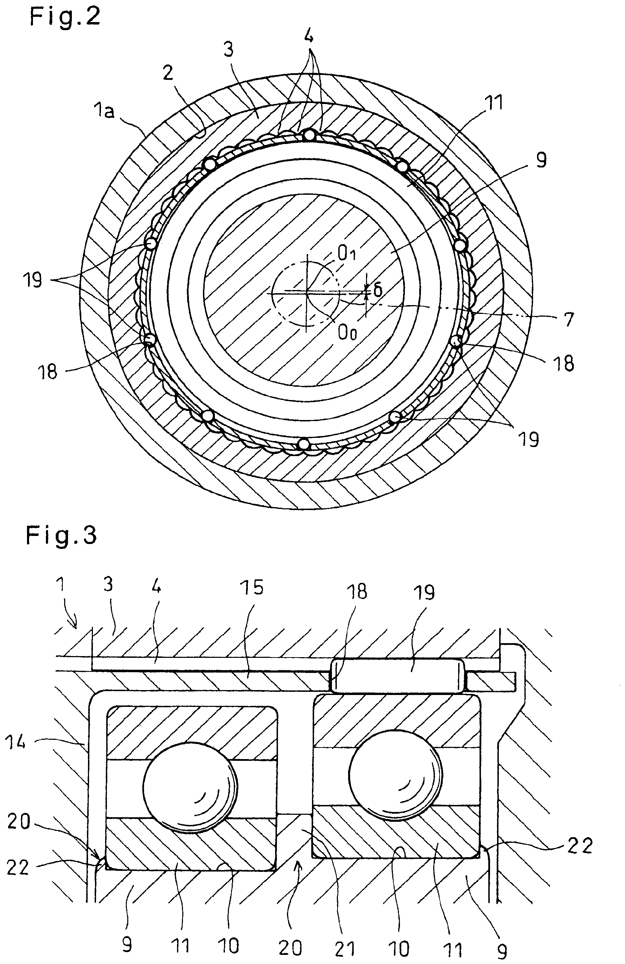

As shown in Figs. 1 and 2, an internal gear 3 is press-fitted in the large-diameter recess 2. The internal gear 3 has a plurality of internal teeth 4 on the inner periphery thereof.

As shown in Fig. 1, the first split housing portion 1a has an end wall 5 at the outer end thereof. The end wall 5 has a shaft inserting hole 6 at its center through which an input shaft 7 is inserted. The input shaft 7 is rotatably supported by a bearing 8 mounted in the shaft inserting hole 6 so as to be coaxial with the internal gear 3. The input shaft 7 carries, at its end portion located inside the housing 1, two axially spaced apart eccentric disks 9 located within the internal gear 3 and rotatable relative to the internal gear 3.

The two eccentric disks 9 have cylindrical radially outer surfaces 10 whose centers are located diametrically opposite to each other. Roller guiding bearings 11 are press-fitted on the respective radially outer surfaces 10. Roller guiding bearings 11 are ball bearings. The letter δ in Fig. 2 indicates the offset between the center O₀ of the input shaft 7 and the center O₁ of the cylindrical radially outer surface of each eccentric disk 9.

As shown in Fig. 1, an output shaft 12 is inserted in the second split housing portion 1b. The output shaft 12 is rotatably supported by bearings 13 mounted in the open end portion of the second split housing portion 1b so as to be coaxial with the input shaft 7.

The output shaft 12 has a flange 14 at its end facing the input shaft 7. The flange 14 has a cage 15 on the outer peripheral portion of its one side surface facing the input shaft 7. The cage 15 is rotatably disposed between the bearings 11 fitted on the respective eccentric disks 9 and the internal gears 3.

The flange 14 has a small-diameter hole 16 at the center of its side surface facing the input shaft. The end of the input shaft 7 is rotatably supported by a bearing 17 mounted in the small-diameter hole 16.

As shown in Figs. 1 to 3, the cage 15 has roller receiving pockets 18 arranged in two rows, with each row of pockets 18 circumferentially equidistantly spaced apart from each other and radially facing one of the bearings 11 supported on the respective two eccentric disks 9. The roller receiving pockets 18 in one row are circumferentially offset from the pockets 18 in the other row by half the pitch.

The roller receiving pockets 18 in each row are fewer than the internal teeth 4 formed on the internal gear 3. A roller 19 is received in each roller receiving pocket 18 so as to be radially movable.

The rollers 19 can engage the internal teeth 4 of the internal gear 3. The internal teeth 4 each have a curved shape such that the circumferentially arranged rollers 19 can simultaneously contact internal teeth 4. In order that all of the rollers 19 can contact internal teeth 4, as described in the above-identified Patent document 1, each internal tooth 4 has a curved shape which coincides with the path of the outer portion of one roller 19 which is parallel to the path of the center of this roller 19 when the output shaft 12 is rotated by an angle corresponding to one pitch of the internal teeth 4 of the internal gear 3 by the eccentric disks 9.

In this roller type speed reducer, when the input shaft 7 rotates, and thus the eccentric disks 9 rotate, the rollers 19 mesh with the internal teeth 4 of the internal gear 3 one after another. The rollers 19 thus move circumferentially by a distance equal to the circumferential dimension of one internal tooth 4 for every rotation of the input shaft 7, thus rotating the output shaft 12 at a reduced speed.

If the input shaft 7 is inclined even slightly due to manufacturing errors of the component parts of the speed reducer and/or assembling errors while assembling the speed reducer, axial loads act on the roller guiding bearings 11 on the respective eccentric disks 9 when the input shaft 7 rotates. Such axial loads could cause separation of the roller guiding bearings 11 from the respective eccentric disks 9.

If either one of the roller guiding bearings 11 separates from the eccentric disk, this bearing 11 will come into contact with e.g. the inner surface of the housing 1, thus generating rotational resistance due to contact friction. Such rotational resistance impairs smooth rotation of the input shaft 7, reducing efficiency of the speed reducer.

In order to prevent separation of the bearings 11, in the embodiment of Fig. 3, an anti-separation means 20 is provided on the radially outer surfaces of the two eccentric disks 9, which are integral with the input shaft 7 to prevent axial movement of the respective roller guiding bearings 11.

The anti-separation means 20 includes an annular protrusion provided between the two eccentric disks 9, and crimped protrusions 22 formed by crimping the ends of the respective eccentric disks 9 remote from the axially facing ends of the respective eccentric disks. The annular protrusion 21 and the crimped protrusions 22 prevent axial movement of the bearings 11 press-fitted on the respective eccentric disks 9. The crimped protrusions 22 shown are annular protrusions but may be projections.

Since the roller guiding bearings 11 are axially held in position by the anti-separation means 20, the bearings 11 can be mounted stably, which reduces the possibility of reduced efficiency of the speed reducer due to separation of either one of the bearings 11.

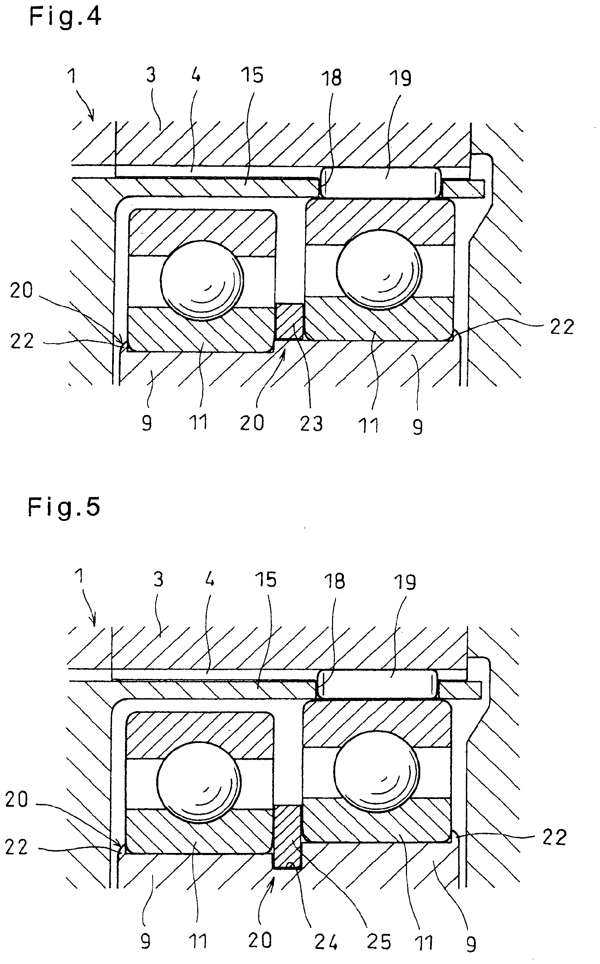

The anti-separation means 20 is not limited to the one including the annular protrusion 21 and the crimped protrusions 22 as shown in Fig. 3. Figs. 4 to 8 show different anti-separation means 20.

The anti-separation means 20 of Fig. 4 includes a spacer 23 fitted between the two eccentric disks 9, and crimped protrusions 22 formed by crimping the outer peripheral portions of the ends of the respective eccentric disks 9 remote from the axially facing ends of the respective eccentric disks. The spacer 23 and the crimped protrusions 22 prevent axial movement of the respective roller guiding bearings 11.

The anti-separation means 20 of Fig. 5 includes a snap ring 25 received in a annular groove 24 formed between the two eccentric disks 9, and crimped protrusions 22 formed by crimping the outer peripheral portions of the ends of the respective eccentric disks 9 remote from the axially facing ends of the respective eccentric disks. The snap ring 25 and the crimped protrusions 22 prevent axial movement of the respective roller guiding bearings 11.

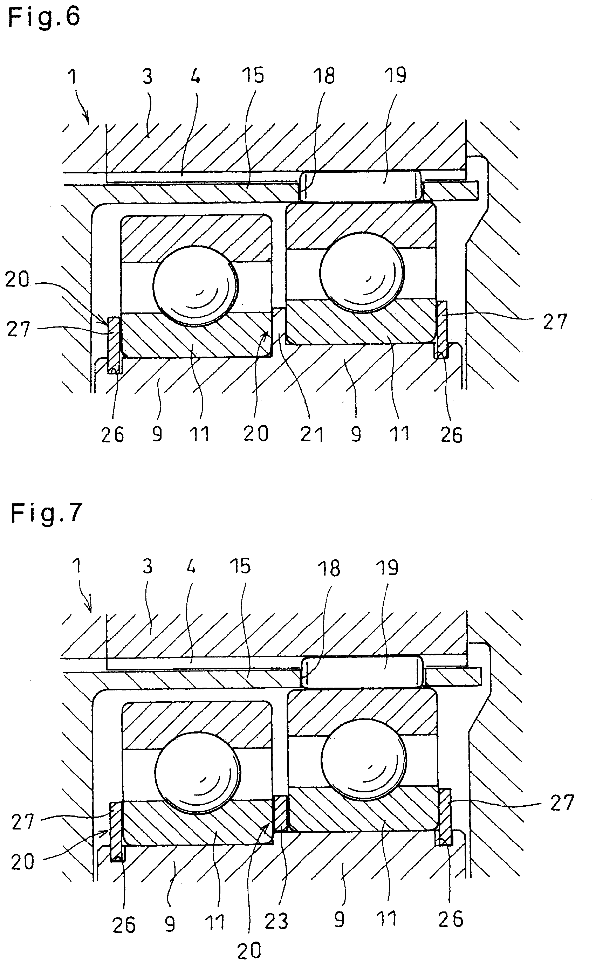

The anti-separation means 20 shown in Fig. 6 includes an annular protrusion 21 formed between the two eccentric disks 9, and snap rings 27 received in annular grooves 26 formed in outer peripheries of the respective eccentric disks 9 at the ends of the respective eccentric disks 9 remote from the axially facing ends of the respective eccentric disks. The annular protrusion 21 and the snap rings 27 prevent axial movement of the respective roller guiding bearings 11.

The anti-separation means 20 shown in Fig. 7 includes a spacer 23 fitted between the two eccentric disks, and snap rings 27 received in annular grooves 26 formed in the outer peripheries of the respective eccentric disks 9 at the ends of the respective eccentric disks 9 remote from the axially facing ends of the respective eccentric disks. The spacer 23 and the snap rings 27 prevent axial movement of the respective roller guiding bearings 11.

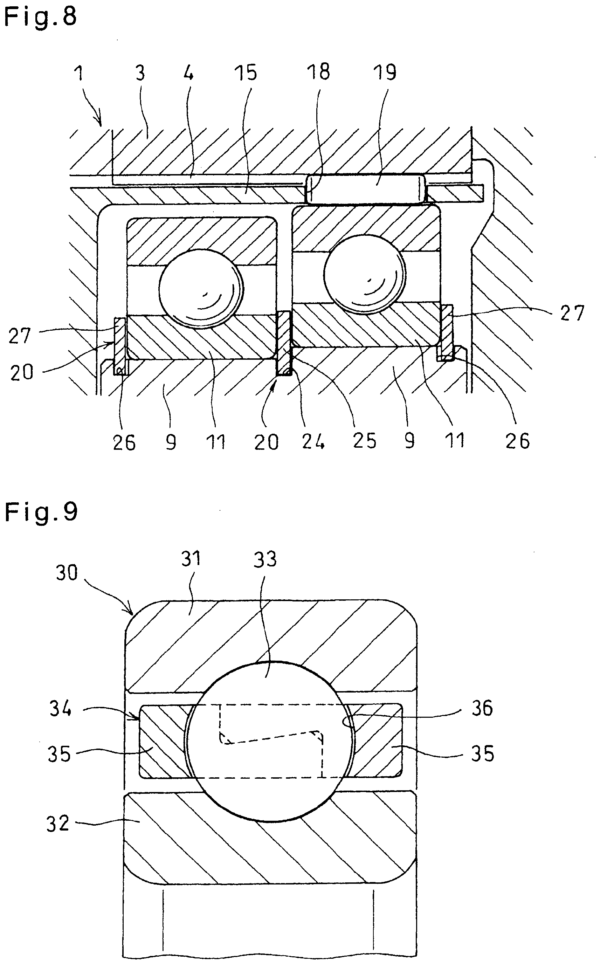

The anti-separation means 20 shown in Fig. 8 includes a snap ring 25 received in an annular groove 24 formed between the two eccentric disks 9, and snap rings 27 received in annular grooves 26 formed in the outer peripheries of the respective eccentric disks 9 at the ends of the respective eccentric disks 9 remote from the axially facing ends of the respective eccentric disks. The three snap rings 25 and 27 are spaced apart from each other corresponding to the widths of the roller guiding bearings 11, thereby preventing axial movement of the respective roller guiding bearings 11.

Any of the anti-separation means 20 shown in Figs. 4 to 8 can reliably prevent separation of the roller guiding bearings 11.

The roller type speed reducer shown in Fig. 1 is mainly used for motor vehicles and is dipped in oil bath. Thus, the bearings 11 fitted on the radially outer surfaces of the eccentric disks 9, as well as the bearings 8 and 13, which rotatably support the input shaft 7 and the output shaft 12, are lubricated by oil of the oil bath. Thus, for these bearings, it is preferable to use low-torque bearings, of which the torque loss is low.

Figs. 9 to 17 show ball bearings suitable for use in such a roller type speed reducer. The ball bearing 30 shown in Fig. 9 includes an outer race 31, an inner race 32, balls 33 mounted between the outer and inner races 31 and 32, and a retainer 34 retaining the balls 33.

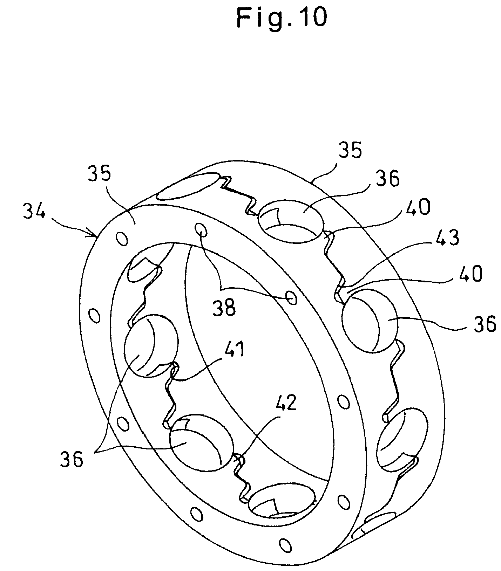

As shown in Figs. 10 to 14, the retainer 34 includes two annular members 35 made of a synthetic resin, which is preferably a resin having excellent lubricity and resistance, such as polyamide resin, polyetheretherketone resin, or polyphenylene sulfide resin.

The two annular members 35 are combined so as to axially face each other. The annular members 35 each have a plurality of circumferentially equidistantly spaced apart ball receiving hemispherical pockets 36 in its surface axially facing the other annular member. A pillar 37 is defined between each adjacent pair of ball receiving pockets 36. The two annular members 35 are coupled together in the axial direction with the axial end surfaces of the pillars 37 of one annular member kept in abutment with the corresponding axial end surfaces of the pillars 37 of the other annular member.

By forming the ball receiving pockets 36 in the surfaces of the two annular members 35 which axially face each other when the annular members are axially coupled together, and by forming holes 38 axially extending through the respective pillars 37 defined between the adjacent ball receiving pockets 36, when lubricating oil flow through the interior of the bearing, lubricating oil also flows through the holes 38 of the pillars 37.

This reduces the total amount of lubricating oil that flows into the gap between the radially inner surface of the outer race 31 and the radially outer surface of the retainer 34, and lubricating oil flowing through the gap between the radially outer surface of the inner race 32 and the radially inner surface of the retainer 34 into the pocket gaps defined between the ball receiving pockets 36 and the balls 33, thereby reducing the shear resistance of lubricating oil by the balls 33, and thus the torque loss in the ball bearing. By using bearings of this type as the roller guiding bearings 11 of the speed reducer shown in Fig. 1, and/or as the bearings for supporting the input shaft 7 and the output shaft 12, it is possible to reduce torque loss and improve efficiency of the speed reducer.

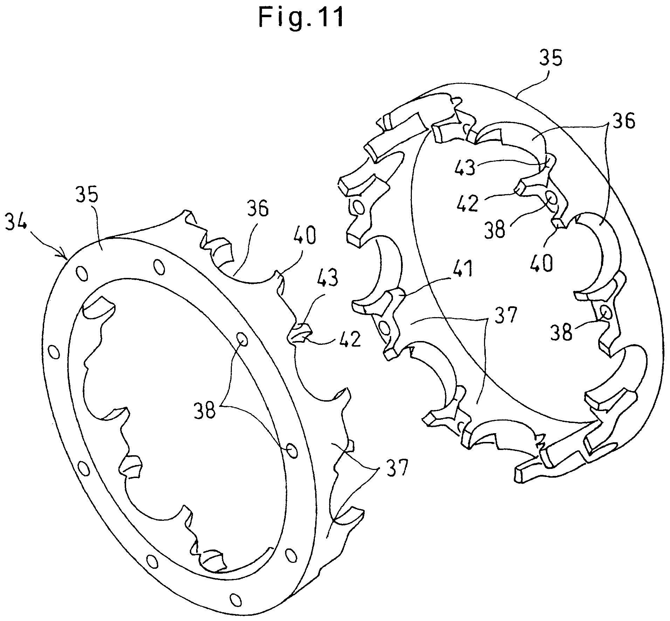

In the illustrative example of Figs. 11 to 14, each annular member 35 has a radially outer protrusion 40 axially extending from the radially outer portion of one circumferential end of each ball receiving pocket 36 and defining a spherical inner surface continuous with the spherical inner surface of the ball receiving pocket 36, and a radially inner recess 41 formed radially inwardly of the radially outer protrusion 40. At the other circumferential end of each ball receiving pocket 36, a radially inner protrusion 42 extends axially from the radially inner portion of the other end of the pocket so as to define a spherical inner surface continuous with the spherical inner surface of the ball receiving pocket 36. A radially outer recess 43 is formed radially outwardly of the radially inner protrusion 42. When coupling the two annular members 35, the radially outer protrusions 40 of each annular member 35 are inserted into the respective radially outer recesses 43 of the other annular member 35 such that the radially outer protrusions 40 axially engage the respective radially inner protrusions 42.

The radially outer protrusions 40 and the radially inner protrusions 42 have mutually engaging surfaces 44 which inclined at angle θ of 5° or over with respect to the axis of the bearing such that the thickness of each of the radially outer and radially inner protrusions 40 and 42 increases from its proximal end to distal end.

By inserting the radially outer protrusions 40 of each annular member 35 into the respective radially outer recesses 43 of the other annular member 35 such that the axially inclined engaging surfaces 44 of the radially outer protrusions 40 and the radially inner protrusions 42 axially engage each other, the two annular members 35 can be axially strongly coupled together. This prevents axial separation of the annular members.

Since the two annular members 35 are identical in shape, they can be formed using a single common mold and thus at a low cost.

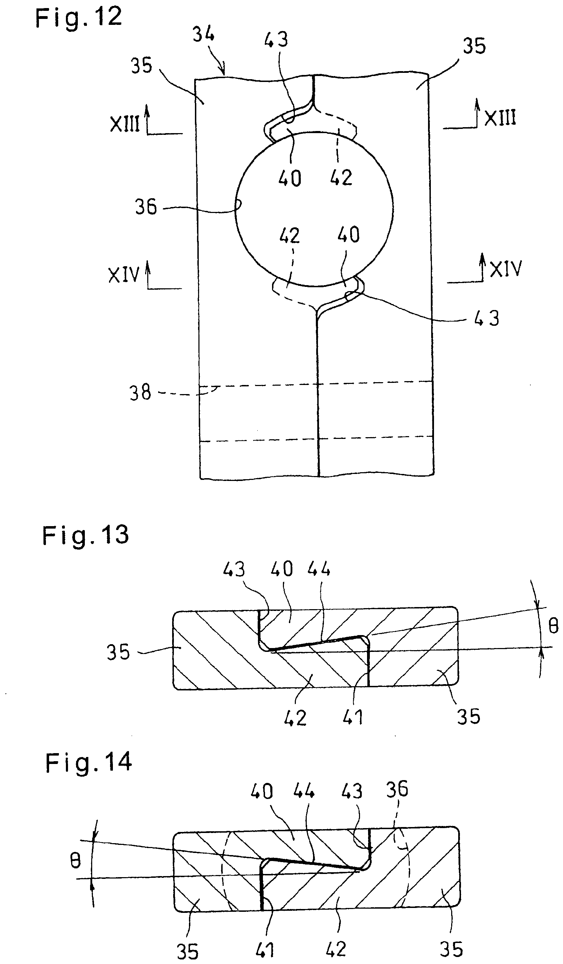

As shown in Figs. 13 and 14, the radially inner protrusions 42 preferably have a larger average thickness than the radially outer protrusions 40. With this arrangement, when a large centrifugal force due to high-speed rotation acts on the annular members 35 with the annular members 35 coupled together by the engagement between the radially outer protrusions 40 and the radially inner protrusions 42, since the radially inner protrusions 42 has a larger mass than the radially outer protrusions 40, the radially inner protrusions 42 are radially outwardly deformed more markedly than the radially outer protrusions, so that the engaging surfaces 44 are engaged more strongly. This more reliably prevents axial separation of the two annular members 35.

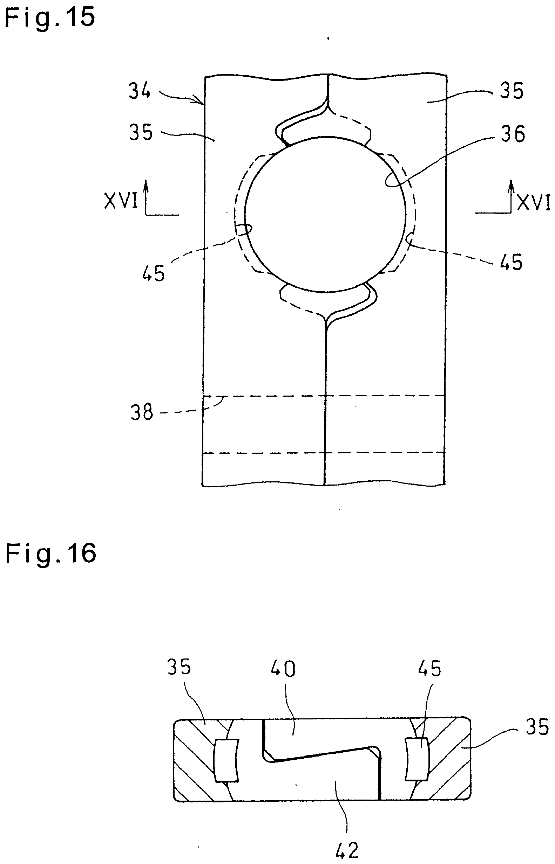

As shown in Figs. 15 and 16, a recess 45 is formed in the inner periphery of each ball receiving pocket 36 to reduce the contact surface area between the ball receiving pocket 36 and the ball 33, thereby further reducing the shear resistance of lubricating oil by the balls 33.

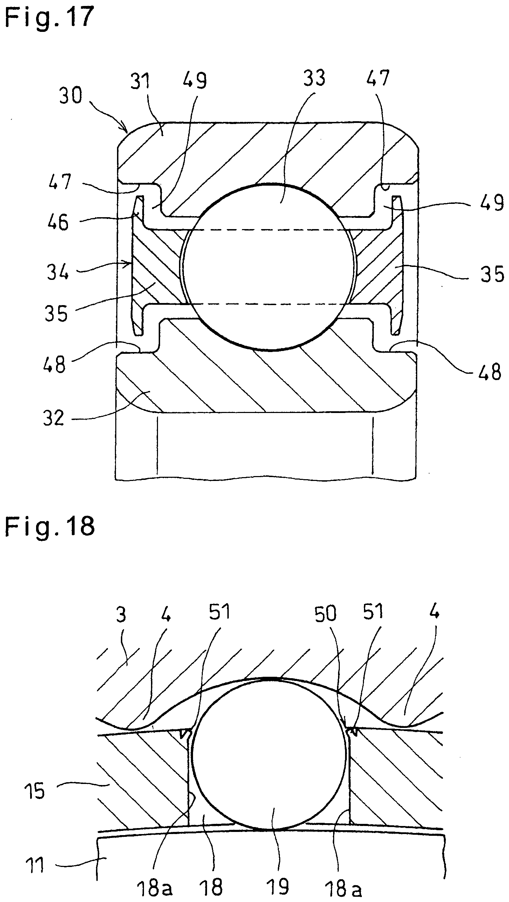

Further, shown in Fig. 17, flanges 46 are formed on each annular member 35 at its axial end, and the inner and outer races 31 and 32 are formed with large-diameter recesses 47 and 48, respectively, for receiving the flanges 46, thereby defining a labyrinth 49 between each flange 46 and the corresponding large-diameter recesses 47 and 48. The labyrinths 49 reduce the amount of lubricating oil flowing into the bearing, thereby further reducing the shear resistance of lubricating oil by the balls 33.

Figs. 18 to 22 show different speed reducers. In the illustrative example of Fig. 18, the cage 15 has a roller stopper means 50 for preventing separation of the rollers 19. The roller stopper means 50 includes opposed pairs of crimped projections 51 formed on the circumferentially opposed pair of side surfaces 18a of each roller receiving pocket 18 near the opening of the pocket 18 on the radially outer side of the cage by crimping the radially outer surface of the cage 15 near the radially outer opening of the pocket 18. The opposed pairs of crimped projections 51 are arranged such that the distance therebetween is shorter than the outer diameter of the roller 19, thereby preventing the roller 19 from coming out of the pocket 18 through the radially outer opening of the pocket 18.

By preventing each roller 19 from coming out of the roller receiving pocket 18 radially outwardly of the cage with the opposed pairs of crimped projections 51 formed at the opening of the pocket 18 at the radially outer surface of the cage, it is possible to prevent the rollers 19 from coming out of the pockets both radially inwardly and outwardly of the cage 15 by inserting the rollers into the respective pockets 18 from radially inside the cage 15, and then by inserting the eccentric disks 9 into the cage 15 with the bearings 11 mounted on the respective eccentric disks 9.

In assembling this speed reducer, it is not necessary to retain the rollers 19 in the respective pockets 18 so as not to come out of the pockets. Thus, the speed reducer can be assembled extremely easily by mounting the cage 15 in the internal gear 3 while preventing separation of the rollers 19.

Alternatively, after mounting the eccentric disks 9 in the cage 15, the rollers 19 may be forcibly pushed into the respective pockets 18 from radially outside the cage, thereby preventing separation of the rollers 19.

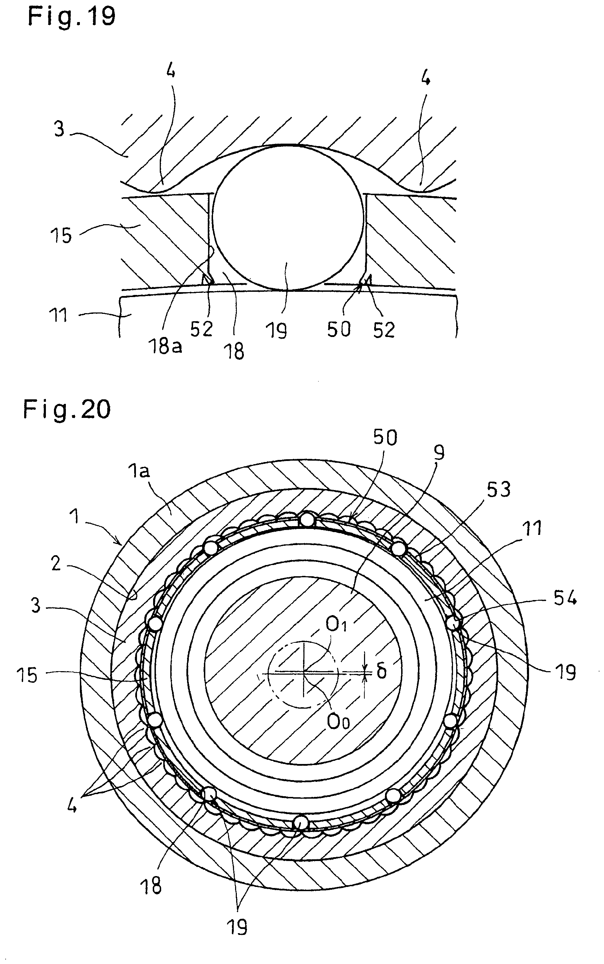

In Fig. 18, the opposed pairs of crimped projections 51 are formed at the opening of each pocket 18 on the radially outer side of the cage to prevent the roller 19 from radially outwardly separating from the cage. But instead, as shown in Fig. 19, opposed pairs of crimped projections 52 may be formed at the opening of each pocket 18 on the radially inner side of the cage to prevent the roller 19 from radially inwardly separating from the cage.

If the roller stopper means 50 of Fig. 19 is used, the rollers 19 are inserted into the respective pockets 18 from radially outside the cage 15, and then the cage 15 is mounted inside of the internal gear 3 such that the rollers 19 cannot separate both radially outwardly and inwardly from the cage 15. In this state, the eccentric disks 9 are mounted in position to assemble the speed reducer.

In the illustrative examples of Figs. 18 and 19, the crimped projections 51 and 52 are used to prevent separation of the rollers 19. But instead of such opposed pairs of projections, ribs may be formed that are elongated in the axial direction of the cage.

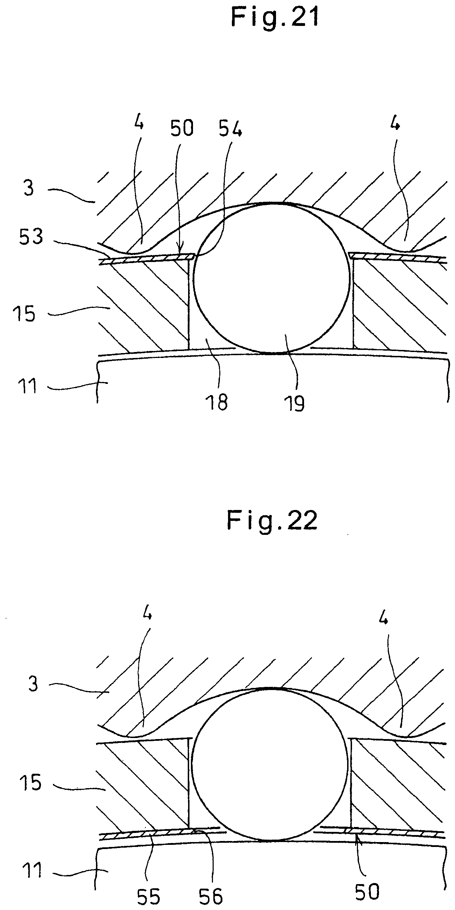

Figs. 20 and 21 show a different roller stopper means 50, which includes a tubular member 53 fitted on the radially outer surface of the cage 15 and formed with rectangular windows 54 aligned with the respective pockets 18 and having a circumferential width smaller than the outer diameter of the rollers 19, thereby preventing the rollers 19 from radially outwardly separating from the cage.

The tubular member 53 may be formed by pressing, i.e. deep-drawing a metal member, or may be in the form of a seamed metal tube formed by punching the pockets 18 in a thin metal sheet with a punching press, bending the metal sheet into a tubular shape, and welding the abutted side edges. Further alternatively, the tubular member may be formed from a synthetic resin.

In the arrangement of Figs. 20 and 21, the tubular member 53 having the rectangular windows 54 is fitted on the radially outer surface of the cage 15 to prevent the rollers 19 from radially outwardly separating from the cage. But instead, as shown in Fig. 22, a tubular member 55 formed with rectangular windows 56 having a circumferential width smaller than the outer diameter of the rollers 19 may be fitted in the radially inner surface of the cage 15 such that the windows 56 are aligned with the respective pockets 18, thereby preventing the rollers 19 from radially inwardly separating from the cage.

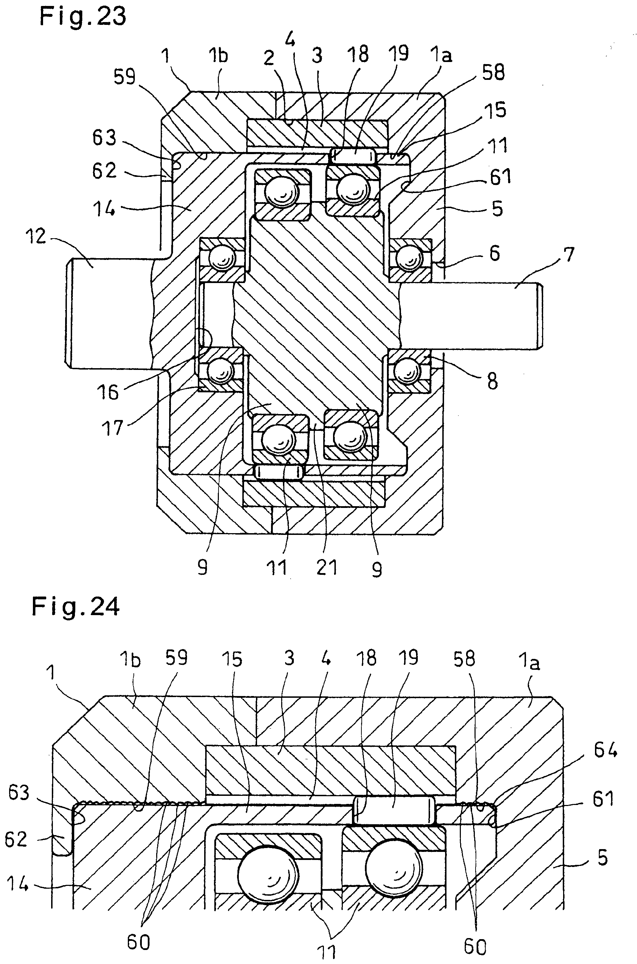

Figs. 23 to 26 show further different speed reducers. In the embodiment of Figs. 23 and 24, the first split housing portion 1a of the housing 1 is formed with a radial bearing surface 58 on its inner periphery which guides, by metal-to-metal contact, the radially outer surface of the cage 15 at its open end portion. The second split housing portion 1b is formed with a radial bearing surface 59 on its inner periphery which guides, by metal-to-metal contact, the radially outer surface of the flange 14. The radial bearing surfaces 58 and 59 are formed with minute recesses 60 for retaining lubricating oil, by shot peening.

The end wall 5 of the first split housing portion 1a is formed with a thrust bearing surface 61 on its inner side surface which axially faces the end surface of the cage 15 at its open end. The second split housing portion 1b has a radially inwardly extending flange 62 at its open end. The inwardly extending flange 62 has a thrust bearing surface 63 on its inner side surface which axially faces the outer peripheral portion of the other side surface of the flange 14 of the output shaft 12.The cage 15 is axially held in position by the thrust bearing surfaces 61 and 63.

A chamfer 64 is formed on the outer peripheral portion of the end surface of the cage 15 at the open end of the cage 15. In Fig. 24, the chamfer 64 is an inclined surface. But the chamfer 64 is not limited to an inclined surface but may be e.g. a circular arc-shaped surface.

In the embodiment of Figs. 23 and 24, while the output shaft 12 is being driven at a reduced speed, the radially outer surface of the cage 15 at its open end portion and the radially outer surface of the flange 14 are guided by the radial bearing surfaces 58 formed on the inner periphery of the first split housing portion 1a and the radial bearing surface 59 formed on the inner periphery of the second split housing portion 1b, respectively, due to metal-to-metal contact therebetween. In this state, since the metal-to-metal contact guide portions are located on both sides of and close to the rollers 17 through which torque is transmitted to the cage 15, the output shaft 12 rotates with high accuracy without run-out and without inclining.

Since the end surface of the cage 15 at its open end is rotatably supported by the thrust bearing surface 61 formed on the end wall 5, while the outer peripheral portion of the other side surface of the flange 14 is rotatably supported by the thrust bearing surface 63 formed on the inner side of the radially inwardly extending flange 62, thrust loads applied to the cage 15 are supported by the thrust bearing surfaces 61 and 63.

The output shaft 12 can thus rotate in a stationary position with high accuracy without oscillating in the axial direction.

Since the radially outer surface of the cage 15 at its open end portion and the radially outer surface of the flange 14 are guided by the radial bearing surfaces 58 formed on the inner periphery of the first split housing portion 1a and the radial bearing surface 59 formed on the inner periphery of the second split housing portion 1b, respectively, due to metal-to-metal contact therebetween, the speed reducer of this embodiment is shorter in axial length than the speed reducer shown in Fig. 1, in which the output shaft 12 is rotatably supported by the two bearings 13.

The minute recesses 60 formed on the respective radial bearing surfaces 58 and 59 by shot peening serve to retain lubricating oil therein, thus preventing seizure of the radial bearing surfaces 58 and 59.

The chamfer 64 formed on the outer peripheral portion of the end surface of the cage 15 at its open end reduces stress on the outer edge of the end surface of the cage at its open end, effectively preventing damage to the cage.

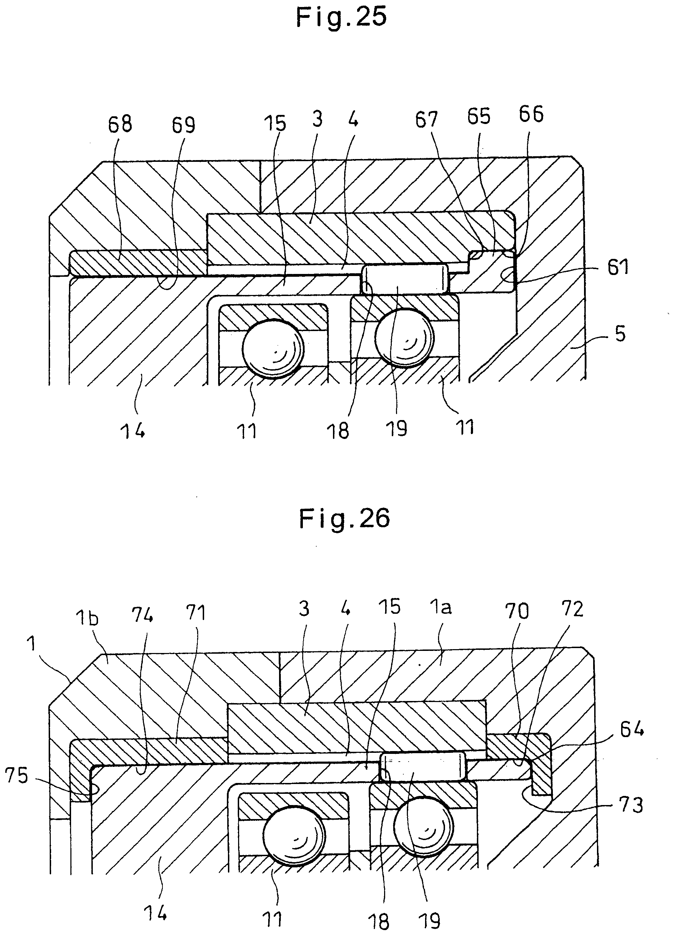

In the illustrative example of Fig. 25, an annular protrusion 65 is formed on the outer periphery of the cage 15 at its open end portion. A radial bearing surface 66 and a thrust bearing surface 67 are formed on the radially inner surface of the internal gear 3 at one end thereof such that the radial bearing surface 66 rotatably supports the radially outer surface of the annular protrusion 65 and the thrust bearing surface 67 supports the side surface of the annular protrusion 65. A metal bearing 68 is press-fitted in the radially inner surface of the second split housing portion 1b to rotatably support the radially outer surface of the flange 14 by a radial bearing surface 69 formed on the radially inner surface of the metal bearing 68.

The metal bearing 68 may be formed by pressing a thin metal sheet, or may be formed from a sintered metal. It may be an oil-containing bearing too.

As shown in Fig. 25, since the radial bearing surface 66 formed on the radially inner surface of the internal gear 3 at the one end thereof rotatably supports the radially outer surface of the annular protrusion 65 formed on the cage 15, while the metal bearing 68 press-fitted in the radially inner surface of the second split housing portion 1b rotatably supports the radially outer surface of the flange 14, the housing 1 can be formed from die-cast aluminum, thereby providing a lightweight speed reducer.

Since the thrust bearing surface 67 formed on the internal gear 3 and the thrust bearing surface 61 formed on the outer peripheral portion of the inner side surface of the end wall 5 rotatably supports the respective side surfaces of the annular protrusion 65, thrust loads applied to the cage 15 are supported by the thrust bearing surfaces 61 and 67. This prevents axial oscillation of the output shaft 12, and thus makes it possible to stably transmit torque.

In the illustrative example of Fig. 26, metal bearings 70 and 71 are press-fitted in the radially inner surface of the first split housing portion 1a and the radially inner surface of the second split housing portion 1b, respectively. The metal bearing 70, which is press-fitted in the first split housing portion la, has a radial bearing surface 72 which guides, by metal-to-metal contact, the radially outer surface of the cage 15 at its open end portion, and a thrust bearing surface 73 which supports the end surface of the casing 15 at its open end. The metal bearing 71, which is press-fitted in the second split housing portion 1b, has a radial bearing surface 74 which guides, by metal-to-metal contact, the radially outer surface of the flange 14, and a thrust bearing surface 75 which supports the outer peripheral portion of the other side surface of the flange 14.

Like the metal bearing of the second embodiment, the metal bearings 70 and 71 may be formed by pressing a thin metal sheet, formed from a sintered metal, or may be an oil-containing bearing.

Since, as shown in Fig. 26, the metal bearing 70 press-fitted in the radially inner surface of the first split housing portion 1a rotatably supports the radially outer surface of the cage 15 at its open end portion, while the metal bearing 71 press-fitted in the radially inner surface of the second split housing 1b rotatably support the radially outer surface of the flange 14, as in the embodiment shown in Fig. 25, the housing 1 can be formed from die-cast aluminum, thereby providing a lightweight speed reducer.

The thrust bearing surfaces 73 and 75 of the respective metal bearings 70 and 71 support thrust loads applied to the cage 15, thus preventing axial oscillation of the output shaft 12, which in turn allows stable transmission of torque.

### DESCRIPTION OF THE NUMERALS

- 1.: Housing
- 3.: Internal gear
- 4.: Internal tooth
- 7.: Input shaft
- 8.: Bearing
- 9.: Eccentric disk
- 11.: Roller guiding bearing
- 12.: Output shaft
- 13.: Bearing
- 14.: Flange
- 15.: Cage
- 18.: Roller receiving pocket
- 19.: Roller
- 20.: Anti-separation means
- 21.: Annular protrusion
- 22.: Crimped protrusion
- 23.: Spacer
- 25, 27.: Snap ring
- 30.: Ball bearing
- 31.: Outer race
- 32.: Inner race
- 33.: Ball
- 34.: Retainer
- 35.: Annular member
- 36.: Ball receiving pocket
- 37.: Pillar
- 38.: Hole
- 40.: Radially outer protrusion
- 41.: Radially inner recess
- 42.: Radially inner protrusion
- 43.: Radially outer recess
- 44.: Engaging surface
- 45.: Recess
- 46.: Flange
- 49.: Labyrinth
- 50.: Roller stopper means
- 51, 52.: Crimped protrusion
- 53, 55.: Tubular member
- 54, 56.: Window
- 58, 59, 66, 69, 72, 74.: Radial bearing surface
- 60.: Recess
- 61, 63, 67, 73, 75.: Thrust bearing surface

## Claims

1. A speed reducer comprising a housing (1), an internal gear (3) supported on a radially inner surface of the housing (1) and formed with a plurality of internal teeth (4) on an inner periphery of the internal gear (3), an input shaft (7) coaxial with the internal gear (3) and carrying two eccentric disks (9) at one end portion of the input shaft (7) located radially inwardly of the internal gear (3), roller guiding bearings (11) press-fitted on a radially outer surface of the respective eccentric disks (9), an output shaft (12) provided coaxially with the input shaft (7) and including a flange (14) at one end portion of the output shaft (12), a cage (15) provided on an outer peripheral portion of one side surface of the flange (14) facing the one end portion of the input shaft (7) and rotatable inside the internal gear (3), the cage having first and second sets of circumferentially equidistantly spaced apart roller receiving pockets (18), each of the first and second sets of pockets (18) being fewer than the number of internal teeth (4) formed on an inner periphery of the internal gear (3), and rollers (19) received in the respective pockets (18) so as to mesh with the internal teeth, whereby when the input shaft (7) rotates once, the respective rollers (19) is moved circumferentially due to rotation of the eccentric disks (9) by a distance equal to one internal tooth (4) while meshing with the internal teeth (4) one after another, thereby rotating the output shaft (12) at a reduced speed, wherein the speed reducer further comprises anti-separation means (20) for preventing axial movement of the roller guiding bearings (11), which are press-fitted on the eccentric disks (9), **characterized in that**
a pair of radial bearing surfaces (58 and 59, 66 and 69, 72 and 74) are formed on an inner side of the housing (1) which guides, by metal-to-metal contact, a radially outer surface of the flange (14), and a radially outer surface of the cage (15) at an open end portion of the cage (15), respectively.

2. The speed reducer according to claim 1, wherein the pair of radial bearing surfaces (58 and 59) are directly formed on the radially inner surface of the housing (1).

3. The speed reducer according to claim 1 or 2, wherein the housing (1) is formed with thrust bearing surfaces (61 and 63) axially facing an outer peripheral portion of another side surface of the flange (14) and an end surface of the cage (15) at the open end of the cage (15), respectively.

4. The speed reducer according to any of claims 1 to 3, wherein each of the pair of radial bearing surfaces (58, 59) is formed with minute recesses (60) for retaining lubricating oil, by shot peening.

5. The speed reducer according to claim 1, wherein the radial bearing surface (66) which guides the radially outer surface of the cage (15) at the open end portion of the cage (15) is formed on a radially inner surface of the internal gear (3), and wherein the radial bearing surface (69) which guides the radially outer surface of the flange (14) is formed on a metal bearing (68) press-fitted in the radially inner surface of the housing (1).

6. The speed reducer according to claim 1, wherein the pair of radial bearing surfaces (72 and 74) are formed on a pair of metal bearings (70 and 71) press-fitted in the radially inner surface of the housing (1) at both ends of the housing (1), respectively.

7. The speed reducer of claim 6, wherein one (71) of the metal bearings (70 and 71) guides the radially outer surface of the flange (14), and is formed with a thrust bearing surface (75) which axially faces an outer peripheral portion of a side surface of the flange (14), and wherein the other (70) of the metal bearings (70 and 71) is formed with a thrust bearing surface (73) axially facing the open end surface of the cage (15).

## Patentansprüche

1. Untersetzungsgetriebe, das ein Gehäuse (1), ein Innenzahnrad (3), das an einer radial innen liegenden Fläche des Gehäuses (1) gelagert ist und mit einer Vielzahl von Innenzähnen (4) an einem Innenumfang des Innenzahnrades (3) versehen ist, eine Eingangswelle (7) koaxial zu dem Innenzahnrad (3), die zwei exzentrische Scheiben (9) an einem Endabschnitt des der Eingangswelle (7) trägt, der radial innerhalb des Innenzahnrades (3) angeordnet ist, Führungs-Rollenlager (11), die auf einer radial außen liegende Fläche der jeweiligen exzentrischen Scheiben (9) aufgepresst sind, eine Ausgangswelle (12), die koaxial zu der Eingangswelle (7) ist und einen Flansch (14) an einem Endabschnitt der Ausgangswelle (12) enthält, einen Käfig (15), der sich an einem Außenumfangsabschnitt einer Seitenfläche des Flansches (14) befindet, die dem einen Endabschnitt der Eingangswelle (7) zugewandt ist, und im Inneren des Innenzahnrades (3) gedreht werden kann, wobei der Käfig eine erste und eine zweite Gruppe in Umfangsrichtung gleichmäßig beabstandete Rollen-Aufnahmevertiefungen (18) aufweist, die Anzahl der ersten und der zweiten Gruppe von Vertiefungen (18) jeweils kleiner ist als die Anzahl von Innenzähnen (4), die an einem Innenumfang des Innenzahnrades (3) ausgebildet sind, sowie Rollen (19) umfasst, die in den jeweiligen Vertiefungen (18) so aufgenommen sind, dass sie mit den Innenzähnen in Eingriff sind, wobei, wenn sich die Eingangswelle (7) einmal dreht, die jeweiligen Rollen (19) aufgrund von Drehung der exzentrischen Scheiben (9) um eine Distanz in Umfangsrichtung bewegt werden, die einem Innenzahn (4) entspricht, und dabei mit den Innenzähnen (4) nacheinander in Eingriff kommen, um so die Ausgangswelle (12) mit einer reduzierten Geschwindigkeit zu drehen, und das Untersetzungsgetriebe des Weiteren Einrichtungen (20) zur Vermeidung von Trennung umfasst, die axiale Bewegung der Führungs-Rollenlager (11) verhindern, die auf die exzentrischen Scheiben (9) aufgepresst sind,
**dadurch gekennzeichnet, dass**
ein Paar Radial-Lagerungsflächen (58 und 59, 66 und 69, 72 und 74) an einer Innenseite des Gehäuses (1) ausgebildet sind, die durch metallischen Kontakt eine radial außen liegende Fläche des Flansches (14) bzw. einer radial außen liegende Fläche des Käfigs (15) an einem offenen Endabschnitt des Käfigs (15) führen.

2. Untersetzungsgetriebe nach Anspruch 1, wobei die paarigen Radial-Lagerungsflächen (58 und 59) direkt an der radial innen liegenden Fläche des Gehäuses (1) ausgebildet sind.

3. Untersetzungsgetriebe nach Anspruch 1 oder 2, wobei das Gehäuse (1) mit Axial-Lagerungsflächen (61 und 63) versehen ist, die einem äußeren Randabschnitt einer anderen Seitenfläche des Flansches (14) bzw. einer Endfläche des Käfigs (15) an dem offenen Ende des Käfigs (15) zugewandt sind.

4. Untersetzungsgetriebe nach einem der Ansprüche 1 bis 3, wobei jede der paarigen Radial-Lagerungsflächen (58, 59) mittels Kugelstrahlen mit kleinen Vertiefungen (60) zum Zurückhalten von Schmieröl versehen wird.

5. Untersetzungsgetriebe nach Anspruch 1, wobei die Radial-Lagerungsfläche (66), die die radial außen liegende Fläche des Käfigs (15) an dem offenen Endabschnitt des Käfigs (15) führt, an einer radial innen liegenden Fläche des Innenzahnrades (3) ausgebildet ist und die Radial-Lagerungsfläche (69), die die radial außen liegende Fläche des Flansches (14) führt, an einem Metalllager (68) ausgebildet ist, das in die radial innen liegende Fläche des Gehäuses (1) eingepresst ist.

6. Untersetzungsgetriebe nach Anspruch 1, wobei die paarigen Radial-Lagerungsflächen (72 und 74) an einem Paar Metalllager (70 und 71) ausgebildet sind, die jeweils an beiden Enden des Gehäuses (1) in die radial innen liegende Fläche des Gehäuses (1) eingepresst sind.

7. Untersetzungsgetriebe nach Anspruch 6, wobei eines (71) der Metalllager (70 und 71) die radial außen liegende Fläche des Flansches (14) führt und mit einer Axial-Lagerungsfläche (75) versehen ist, die einem äußeren Randabschnitt einer Seitenfläche des Flansches (14) axial zugewandt ist, und das andere (70) der Metalllager (70 und 71) mit einer Axial-Lagerungsfläche (73) versehen ist, die der offenen Endfläche des Käfigs (15) axial zugewandt ist.

## Revendications

1. Réducteur de vitesse comprenant une enveloppe (1), un pignon interne (3) supporté sur une surface radiale interne de l'enveloppe (1) et doté d'une pluralité de dents (4) internes sur la périphérie interne du pignon interne (3), un arbre d'entrée (7) coaxial avec le pignon interne (3) et transportant deux disques excentrés (9) à une première extrémité de l'arbre d'entrée (7) située radialement vers l'intérieur du pignon interne (3), des paliers de guidage de rouleaux (11) ajustés à force sur la surface radiale externe des disques excentrés (9) respectifs, un arbre de sortie (12) disposé pour être coaxial avec l'arbre d'entrée (7) et incluant un flasque (14) à une extrémité de l'arbre de sortie (12), une cage (15) disposée sur une partie périphérique externe d'une surface latérale du flasque (14) faisant face à l'extrémité de l'arbre d'entrée (7) et pouvant tourner à l'intérieur du pignon interne (3), la cage possédant des premier et second ensembles de cavités (18) de réception de rouleaux espacées circonférentiellement de façon équidistante, chacun des premier et second ensembles de cavités (18) étant en nombre inférieur au nombre de dents (4) internes formées sur la périphérie interne du pignon interne (3), ainsi que des rouleaux (19) reçus dans les cavités (18) respectives de sorte à s'engrener avec les dents internes, grâce à quoi, lorsque l'arbre d'entrée (7) fait un tour, les rouleaux (19) respectifs sont déplacés circonférentiellement en raison de la rotation des disques excentrés (9) d'une distance égale à une dent (4) interne tout en s'engrenant avec les dents (4) internes l'une après l'autre, ce qui fait ainsi tourner l'arbre de sortie (12) à vitesse réduite, le réducteur de vitesse comprenant en outre un organe anti séparation (20) destiné à empêcher tout mouvement axial des paliers de guidage de rouleaux (11) qui sont ajustés à force sur les disques excentrés (9),
**caractérisé en ce que** :
une paire de surfaces radiales de palier (58 et 59, 66 et 69, 72 et 74) est formée sur le côté interne de l'enveloppe (1), laquelle guide respectivement, par contact métal sur métal, la surface radiale externe du flasque (14) et la surface radiale externe de la cage (15) au niveau de la partie d'extrémité ouverte de la cage (15).

2. Réducteur de vitesse selon la revendication 1, dans lequel la paire de surfaces radiales de palier (58 et 59) est directement formée sur la surface radiale interne de l'enveloppe (1).

3. Réducteur de vitesse selon la revendication 1 ou la revendication 2, dans lequel l'enveloppe (1) est dotée de surfaces de paliers de butée (61 et 63) faisant respectivement face dans l'axe à une partie périphérique externe de l'autre surface latérale du flasque (14) et à une surface terminale de la cage (15) au niveau de l'extrémité ouverte de la cage (15).

4. Réducteur de vitesse selon l'une quelconque des revendications 1 à 3, dans lequel chaque surface de la paire de surfaces radiales de palier (58 et 59) est dotée d'évidements (60) minuscules afin de retenir de l'huile de lubrification par microbillage.

5. Réducteur de vitesse selon la revendication 1, dans lequel la surface radiale de palier (66) qui guide la surface radiale externe de la cage (15) au niveau de l'extrémité ouverte de la cage (15) est formée sur la surface radiale interne du pignon interne (3), et dans lequel la surface radiale de palier (69) qui guide la surface radiale externe du flasque (14) est formée sur un palier métallique (68) ajusté à force dans la surface radiale interne de l'enveloppe (1) .

6. Réducteur de vitesse selon la revendication 1, dans lequel la paire de surfaces radiales de palier (72 et 74) est formée sur une paire de paliers métalliques (70 et 71) ajustés à force dans la surface radiale interne de l'enveloppe (1) aux deux extrémités de l'enveloppe (1), respectivement.

7. Réducteur de vitesse selon la revendication 6, dans lequel l'un (71) des paliers métalliques (70 et 71) guide la surface radiale externe du flasque (14), et il est doté d'une surface de palier de butée (75) qui fait face dans l'axe à une partie périphérique externe d'une surface latérale du flasque (14), et où l'autre (70) des paliers métalliques (70 et 71) est doté d'une surface de palier de butée (73) faisant face dans l'axe à la surface terminale ouverte de la cage (15) .
